# EUROPÄISCHE PATENTANMELDUNG

(11) **EP 0 936 043 A2**
(43) Veröffentlichungstag der Anmeldung: **18.08.1999**
(21) Anmeldenummer: 99103269.9
(22) Anmeldetag: 10.02.1999
(51) Int. Cl.: B29C 44/34, B29C 33/10, B29C 44/14

(54) **Verfahren zum Herstellen von Schaumstoffteilen sowie Form zur Durchführung des Verfahrens**

(30) Priorität: 12.02.1998 DE 19805636
(71) Anmelder: Schröter Profilstab GmbH, 71546 Aspach (DE); Kunststofftechnik Werner Bieda, 88138 Hergensweiler (DE)
(72) Erfinder: Bieda, Werner, 88138 Sigmarszell (DE)
(74) Vertreter: Patentanwalts-Partnerschaft Rotermund + Pfusch

(57) **Zusammenfassung**

Eine Papier- bzw. Furnierbahn (5) bildet die Oberfläche eines Schaumstoffteiles (6), welches in einer werkstückseitig im wesentlichen ganzflächig durchdurchlässigen Form (1,2) hergestellt wird, in die die Papier- bzw. Furnierbahn eingelegt bzw. eingezogen wird.

## Beschreibung

Die Erfindung betrifft ein Verfahren zur Herstellung von Schaumstoffteilen, insbesondere für Möbel, Wandverkleidungen und Profile, wobei eine als Sichtfläche vorgesehene bzw. die Sichtfläche tragende folienartige Bahn in bzw. auf eine Form ein- bzw- aufgelegt und hinterschäumt wird, deren Werkstückseite im wesentlichen ganzflächig in Luftaustausch mit einem von der Werkstückseite entfernten, mit der Atmosphäre bzw. einer Unterdruckquelle kommunizierenden Bereich der Form steht.

Ein entsprechendes Verfahren ist Gegenstand der DE-OS 1 629 485. Die bei diesem bekannten Verfahren eingesetzte Form besitzt eine untere sowie eine obere Formhälfte. Diese Formhälften bestehen jeweils vorzugsweise aus halbsteifem, offenporigem Polyurethanschaum, welcher eine gewisse federnde Nachgiebigkeit aufweist. Das Schaummaterial jeder Formhälfte ist jeweils in einem Formkasten untergebracht, welcher auf der dem jeweils anderen Formkasten der anderen Formhälfte zugewandten Seite offen ist. Jeder Formkasten ist mit einem Saugstutzen versehen. In die Formhälften lassen sich Kunststoffolien einlegen und nach Schließen der Form hinterschäumen. Diese Kunststoffolien sollen zumindest in einer Formhälfte mit eng benachbarten Öffnungen versehen sein, damit die Luft auf der Schaumseite der Folie beim Ausschäumen durch die Folie hindurch nach außen verdrängt und über den Saugstutzen zumindest einer Formhälfte abgesaugt werden kann. Um zu verhindern, daß durch die Öffnungen der Folie hindurchdringender Schaum in die Poren der Form eintreten kann, kann zwischen der Werkstückseite der Form und der gelochten Folie Seidenpapier od.dgl. als saugfähige Schicht angeordnet sein.

Bei der Herstellung von Platten- und Profilteilen für Möbel, Wandverkleidungen und Inneneinrichtungen von Räumen und Campingfahrzeugen u.dgl. werden typischerweise Holzfaserplatten eingesetzt, deren Oberflächen in der Regel mit Dekorfolien umkleidet werden, wobei durch Folien mit entsprechendem Dekor sowohl visuell als auch haptisch der Eindruck einer Holzoberfläche erzielbar ist.

Die Verarbeitung der Holzfaserplatten bzw. der gegebenenfalls auch eingesetzten Sperrholzplatten ist vergleichsweise aufwendig. Außerdem führt dieses Material zu einem vergleichsweise hohem Gewicht. Dies ist zumindest bei der Inneneinrichtung von Wohn- und Campingfahrzeugen ein erheblicher Nachteil. Im übrigen muß wegen unvermeidbarer Feuchtigkeit bei einem Wohn- bzw. Campingfahrzeug damit gerechnet werden, daß sich die Möbel- bzw. Inneneinrichtungsteile im Laufe der Zeit mehr oder weniger stark verziehen.

Deshalb ist Aufgabe der Erfindung, für die Inneneinrichtung von Wohn- und Campingfahrzeugen geeignete leichte und formstabile Elemente zu schaffen, welche sich hinsichtlich ihres Aussehens weitestgehend beliebig gestalten lassen.

Diese Aufgabe wird erfindungsgemäß mit einem Verfahren der eingangs angegebenen Art gelöst, indem als Sichtfläche eine Papier- und/oder Furnierbahn verwendet wird.

Die Erfindung beruht auf dem allgemeinen Gedanken, Schaumstoffteile herzustellen, deren Sichtseiten durch Furnierbahnen bzw. Papierbahnen, insbesondere solche mit Holzdekor, gebildet werden. Dabei erfolgt die Formgebung der Furnierbzw. Papierbahnen mittels Formen, deren Werkstückseite im wesentlichen ganzflächig luftdurchlässig ist und in Luftaustausch mit einem von der Werkstückseite entfernten, mit der Atmosphäre und/oder einer Unterdruckquelle verbundenen Bereich steht.

Bei einfachen Formteilen mit geringer Profilierung bzw. Profiltiefe kann es ausreichend sein, wenn die Furnier- bzw. Papierbahn durch das sich ausdehnende Schaummaterial gegen die Werkstückseite der Form gepreßt wird.

Gemäß einer besonders bevorzugten Ausführungsform der Erfindung ist vorgesehen, die Furnier- bzw. Papierbahn 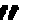 tiefzuziehen", indem die Werkstückseite der Form über die Formrückseite mit einer Unterdruckquelle verbunden und die Papier- bzw. Furnierbahn durch Unterdruck in die Form eingezogen wird, bevor die Furnier- bzw. Papierbahn hinterschäumt wird.

Gegebenenfalls kann die Formbarkeit der Papier- oder Furnierbahn durch Befeuchtung, beispielsweise durch Bedampfung mit Wasserdampf, verbessert werden.

Jedoch haben Versuche gezeigt, daß auch bei ausgeprägter Profilierung hervorragende Ergebnisse erzielt werden können, wenn das zum Hinterschäumen der Papierbahn verwendete Kunststoffmaterial mit Wasser unter Generierung von CO₂ aufgeschäumt wird.

Die luftdurchlässige Form kann gemäß einer Ausführungsvariante der Erfindung aus einem Aluminiumgranulat, welches mit einem Bindemittel versetzt ist, herstellt werden. Auf diese Weise lassen sich Formen mit sehr großer Standzeit herstellen.

Die Formgebung des Aluminiumgranulats kann durch Verpressung des Granulates auf einem Holzmodell od. dgl. erfolgen.

Eine besonders vorteilhafte Alternative besteht darin, die Form im wesentlichen als luftdurchlässige Hart- bzw. Holzfaserplatte auszubilden, deren Werkstückseite durch übliche Methoden der Holzverarbeitung ausgeformt werden kann, beispielsweise durch Fräsen.

Derartige Formen besitzen zwar eine geringere Standzeit als die Formen aus Aluminiumgranulat. Jedoch ist die Formherstellung außerordentlich preisgünstig, so daß gegebenenfalls notwendige Ersatzformen mit geringem Aufwand hergestellt werden können. Darüber hinaus besteht die Möglichkeit, ohne übermäßigen Aufwand unterschiedliche Formen herzustellen, so daß auch unterschiedlich geformte Schaumstoffteile in kleinen Serien wirtschaftlich herstellbar werden und eine große Flexibilität hinsichtlich Sonderwünsche bei der Formgebung besteht.

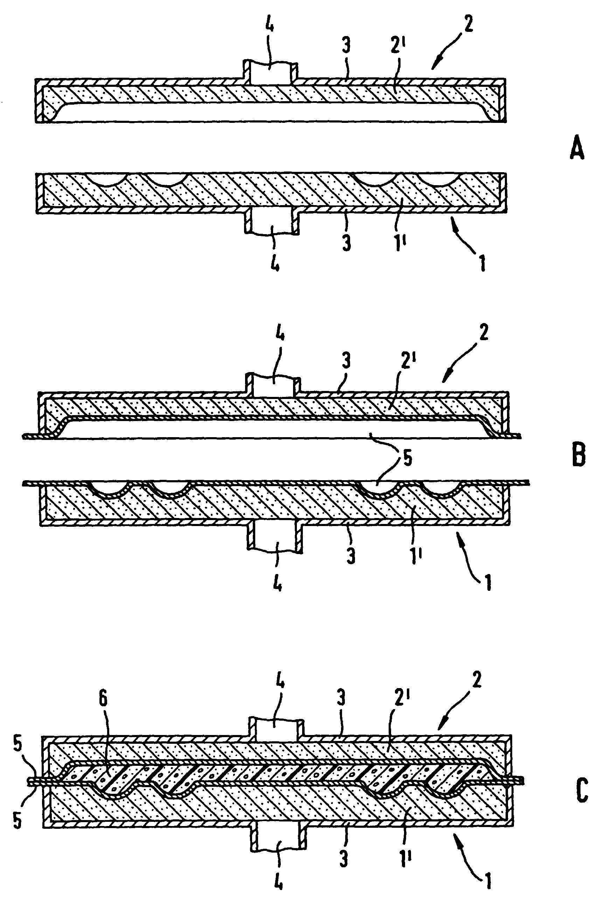

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung beschrieben wird.

Dabei zeigt die einzige Figur verschiedene Phasen der Herstellung eines Profil- bzw. Wandteiles gemäß der Erfindung.

Gemäß dem Bild A der Zeichnung ist für die Formung der Vorderseite eines Plattenteiles eine Teilform 1 und für die Formung der Rückseite des vorgenannten Plattenteiles eine Teilform 2 vorgesehen. Diese Formen bestehen jeweils aus luftdurchlässigem, porösen Material 1' bzw. 2', welches auf der der jeweils anderen Teilform zugewandten Seite der Teilformen 1 und 2 entsprechend der gewünschten Form des Werkstückes ausgeformt ist, während die Rückseite mit einer nach Art eines Formkastens ausgebildeten luftundurchlässigen Ummantelung 3 versehen ist. Die Ummantelung 3 ist jeweils mit einem Saugstutzen 4 versehen, der mit einer nicht dargestellten Vakuumpumpe od.dgl. verbindbar ist, mittels der jeweils Luft durch das Material 1' bzw. 2' gesaugt werden kann.

Gemäß dem Bild B wird auf die Teilformen 1 und 2 jeweils eine Papierbahn 5 gelegt, die dann aufgrund der am jeweiligen Saugstutzen 4 wirksamen Vakuumquelle in bzw. auf die jeweilige Teilform 1 bzw. 2 gezogen wird, wobei sich die Papierbahn 5 fest an die jeweilige Teilform 1 bzw. 2 anlegt. Die Papierbahn 5 wird also durch Vakuumziehen verformt.

Gemäß dem Bild C werden die Teilformen 1 und 2 gegeneinander gedrückt, so daß sich ein mit der Papierbahn 5 ausgekleideter Hohlraum bildet, der dann nachfolgend mit Kunststoffmaterial 6 ausgeschäumt wird.

Bei dem Kunststoffmaterial handelt es sich vorzugsweise um eine Ein- oder Zwei-Komponenten-Kunststoffmischung, die mit Wasser unter Generierung von Kohlendioxyd aufgeschäumt wird. Dabei wird die Papierbahn 5 unter dem an den Saugstutzen 4 wirksamen Vakuum sowie dem Druck des Kunststoffschaums extrem glatt an die jeweiligen Teilformen 1 und 2 anlegt.

Gegebenenfalls kann die Flexibilität der Papierbahn 5 noch dadurch erhöht werden, daß die Papierbahn 5 vor dem Vakuumziehen mit Wasserdampf befeuchtet wird.

Sobald der Kunststoffschaum ausgehärtet ist, werden die Teilformen 1 und 2 voneinander getrennt, und das fertiggestellte Werkstück kann herausgenommen werden.

Anstelle der Papierbahn 5 kann auch eine dünne Furnierbahn eingesetzt werden. Soweit das Furnier für das Vakuumziehen eine zu hohe Luftdurchlässigkeit aufweist, wird die Furnierbahn vor Verarbeitung in den Formen 1 und 2 mit einer Kunststoffbahn oder einer Papierbahn od.dgl. zu einem Laminat verbunden.

Im übrigen ist es auch möglich, anstelle der Papierbahn dünne Folien aus Kunststoff einzusetzen, welche gegebenenfalls auf ihrer für die Hinterschäumung vorgesehenen Seite mit Lack beschichtet sind. Nach Aushärtung des Schaumstoffes und Trennung des Werkstückes von den Teilformen 1 und 2 kann die Kunststoffolie vom Werkstück abgezogen werden, so daß nur noch der Lack auf dem Schaumstoffteil verbleibt.

Das luftdurchlässige Material 1' und 2' der Teilformen 1 und 2 besteht vorzugsweise aus einem Aluminiumgranulat mit einer Partikelgröße im µ-Bereich und unrunder Partikelform. Dieses Granulat wird mit einem Bindemittel auf einem Holzmodell (oder einem Modell aus einem anderen einfach zu bearbeitenden Material) verpreßt. Nach Aushärtung des luftdurchlässigen Materials 1' bzw. 2' kann dessen werkstückseitige Oberfläche in grundsätzlich beliebiger Weise, z.B. durch Schleifen oder Fräsen, bearbeitet werden, um besonders glatte Oberflächen zu ermöglichen.

Gemäß einer besonders bevorzugten Ausführungsform der Erfindung kann das poröse Material 1' bzw. 2' der Formen 1 und 2 auch durch luftdurchlässige Hart- bzw. Holzfaserplatten gebildet sein, deren Werkstückseite durch übliche Verfahren der Holzbearbeitung, z.B. Fräsen, ausgeformt werden kann.

Auf der von der Werkstückseite abgewandten Seite sind diese Faserplatten 1' und 2' dann wiederum mit einer luftundurchlässigen Ummantelung 3 mit Saugstutzen 4 versehen, wobei auf der von der Werkstückseite abgewandten Rückseite der Faserplatten 1' bzw. 2' innenseitig der Ummantelung jeweils mit dem Saugstutzen 4 kommunizierende Nuten bzw. Kanäle ausgefräst bzw. ausgebildet sein können, um den Luftdurchsatz von der Werkstückseite zum Saugstutzen 4 zu erleichtern.

Ein besonderer Vorzug der Erfindung liegt darin, daß die Form bei der Herstellung des Werkstückes nicht oder nur geringfügig beheizt werden muß. Allein die Reaktionswärme, die bei der Reaktion der Kunststoffkomponenten miteinander und damit beim Aushärten des Kunststoffes entsteht, reicht für eine innige und sichere Verbindung zwischem dem Schaumstoff und der Furnier- bzw. Papierbahn aus. Wenn die Formen aus Hart- bzw. Holzfaserplatten bestehen, kann die Reaktionswärme besonders wirksam werden, weil derartige Formen nur ein sehr geringes Wärmeleitvermögen aufweisen.

Die Erfindung ist nicht auf Schaumstoffteile mit aus Papier- oder Furnierbahnen bestehenden Sichtflächen beschränkt. Grundsätzlich können auch Kunststoffolien, insbesondere auch geschlossene Kunststoffolien, als Sichtflächen eingesetzt werden. Zum Tiefziehen dieser Folien vor bzw. bei der Hinterschäumung sind die Formen aus Aluminiumgranulat und insbesondere auch die Formen als Hart- bzw. Holzfaserplatten gut geeignet.

## Patentansprüche

1. Verfahren zur Herstellung von Schaumstoffteilen, insbesondere für Möbel, Wandverkleidungen und Profile, wobei eine als Sichtfläche vorgesehene bzw. die Sichtfläche tragende folienartige Bahn in bzw. auf eine Form ein- bzw. aufgelegt und hinterschäumt wird, deren Werkstückseite im wesentlichen ganzflächig in Luftaustausch mit einem von der Werkstückseite entfernten, mit der Atmosphäre bzw. einer Unterdruckquelle kommunizierenden Bereich der Form steht,
**dadurch gekennzeichnet,**
daß als Sichtfläche eine Papier- oder Furnierbahn verwendet wird.

2. Verfahren nach Anspruch 1,
**dadurch gekennzeichnet,**
daß die Werkstückseite der Form über die Formrückseite mit einer Unterdruckquelle verbunden und die Papier- bzw. Furnierbahn durch Unterdruck in die Form eingezogen wird.

3. Verfahren zur Herstellung von Schaumstoffteilen, insbesondere für Möbel, Wandverkleidungen und Profile, wobei eine als Sichtfläche vorgesehene bzw. die Sichtfläche tragende folienartige Bahn in bzw. auf eine Form ein- bzw. aufgelegt und hinterschäumt wird, deren Werkstückseite im wesentlichen ganzflächig in Luftaustausch mit einem von der Werkstückseite entfernten, mit der Atmosphäre und/oder einer Unterdruckquelle verbundenen Bereich steht, insbesondere nach Anspruch 1 oder 2,
**dadurch gekennzeichnet,**
daß das Material für die Hinterschäumung mit Wasser unter Bildung von Kohlendioxyd aufgeschäumt wird.

4. Verfahren nach einem der Ansprüche 1 bis 3,
**dadurch gekennzeichnet,**
daß die Papier- bzw. Furnierbahn vor der Hinterschäumung in der Form mit Wasserdampf beaufschlagt wird.

5. Verfahren nach einem der Ansprüche 1 bis 4,
**dadurch gekennzeichnet,**
daß die Form aus einer luftdurchlässigen Hart- bzw. Holzfaserplatte hergestellt wird.

6. Verfahren nach Anspruch 5,
**dadurch gekennzeichnet,**
daß die Werkstückseite der Form durch Fräsen geformt wird.

7. Verfahren nach einem der Ansprüche 1 bis 4,
**dadurch gekennzeichnet,**
daß die Form aus einem Aluminiumgranulat, welches mit einem Bindemittel versetzt ist, hergestellt wird.

8. Luftdurchlässige Form mit ganzflächig in Luftaustausch mit einer Formrückseite bzw. einem Formrückseitenbereich stehender Werkstückseite, geeignet zur Durchführung eines Verfahrens nach einem der Ansprüche 1 bis 7,
**dadurch gekennzeichnet,**
daß die Form im wesentlichen als luftdurchlässige Hart- bzw. Holzfaserplatte ausgebildet ist.

9. Form nach Anspruch 8,
**dadurch gekennzeichnet,**
daß zwischen einer die Form außerhalb der Werkstückseite umhüllenden und mit einem Sauganschluß versehenen, nach Art eines Formkastens ausgebildeten Ummantelung und der Hart- bzw. Holzfaserplatte Luftkanäle angeordnet sind.
